(19) Europäisches Patentamt
European Patent Office
Office européen des brevets

(11) Veröffentlichungsnummer: **0 314 993**
**A2**

# (12) EUROPÄISCHE PATENTANMELDUNG

(21) Anmeldenummer: **88117533.5**

(51) Int. Cl.4: **C07F 7/08 , C08K 5/54**

(22) Anmeldetag: **21.10.88**

(30) Priorität: **31.10.87 DE 3736990**

(43) Veröffentlichungstag der Anmeldung:
**10.05.89 Patentblatt 89/19**

(84) Benannte Vertragsstaaten:
**AT DE ES FR GB IT NL**

(71) Anmelder: **BAYER AG**
**Konzernverwaltung RP Patentabteilung**
**D-5090 Leverkusen 1 Bayerwerk(DE)**

(72) Erfinder: **Meier, Helmut-Martin, Dr.**
**Am Obersthof 3**
**D-4030 Ratingen-Eggerscheidt(DE)**
Erfinder: **Klöker, Werner, Prof. Dr.**
**Deswatinesstrasse 26**
**D-4150 Krefeld(DE)**
Erfinder: **Sickert, Armin**
**Schreberstrasse 9**
**D-4150 Krefeld 1(DE)**

## (54) 1,7,9,15-Tetraoxa-4,12-diaza-8-silaspiro-[7.7]-pentadecane, Verfahren zu ihrer Herstellung und ihre Verwendung.

(57) Die neuen 1,7,9,15-Tetraoxa-4,12-diaza-8-silaspiro-[7.7]-pentadecane, die durch Umsetzung entsprechender Alkoxysilane mit entsprechenden Alkanolaminen hergestellt werden, finden vor allem Verwendung als Härtungsbeschleuniger für ungesättigte Polyesterharze und Acrylharze.

EP 0 314 993 A2

Xerox Copy Centre

## 1,7,9,15-Tetraoxa-4,12-diaza-8-silaspiro-[7.7]-pentadecane, Verfahren zur ihrer Herstellung und ihre Verwendung

Die vorliegende Erfindung betrifft neue 1,7,9,15-Tetraoxa-4,12-diaza-8-silaspiro-[7.7]-pentadecane, ihre Herstellung sowie ihre Verwendung als Beschleuniger für ungesättigte Polyesterharze.

Die neuen 1,7,9,15-Tetraoxa-4,12-diaza-8-silaspiro-[7.7]-pentadecane gemäß der vorliegenden Erfindung entsprechen der Formel (I)

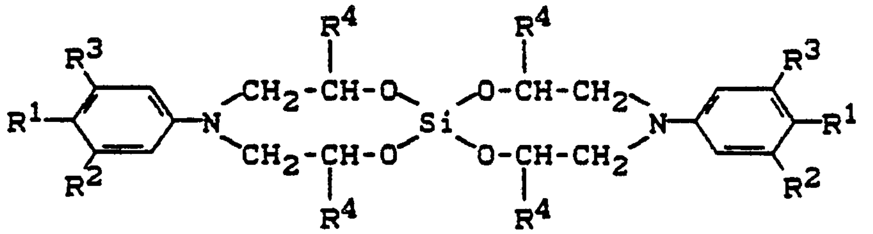
(I),

worin

$R^1$, $R^2$ und $R^3$ gleich oder verschieden sind und für Wasserstoff, $C_1$-$C_{18}$-Alkyl, $C_5$-$C_8$-Cycloalkyl, $C_5$-$C_{14}$-Aryl, Fluor, Chlor, Brom oder Jod stehen und

$R^4$ Wasserstoff, $C_1$-$C_{12}$-Alkyl, $C_6$-$C_{12}$-Aryl, Hydroxy-$C_1$-$C_6$-alkyl, Chlor-$C_1$-$C_6$-alkyl, $C_1$-$C_6$-Alkoxy-$C_1$-$C_6$-alkyl, $C_6$-$C_{12}$-Aryloxy-$C_1$-$C_6$-alkyl oder $C_2$-$C_6$-Acyloxy-$C_1$-$C_6$-alkyl

bedeutet.

Bevorzugt seien als $R^1$ bis $R^3$ genannt:

Wasserstoff, Methyl, Chlor, Brom, Cyclohexyl, tert.-Butyl und Phenyl.

Als $R^4$ seien bevorzugt genannt:

Wasserstoff, Methyl, Ethyl, Hydroxymethyl, Chlormethyl, Decyl, Phenyl, Phenyloxymethyl, p-Kresyloxymethyl, m-Kresyloxymethyl, o-Kresyloxymethyl und Benzoyloxymethyl.

Besonders bevorzugt sind die Verbindungen der Formel (I), in denen $R^1$ bis $R^4$ Wasserstoff und Methyl bedeuten.

Ein weiterer Gegenstand der Erfindung ist ein Verfahren zur Herstellung der neuen 1,7,9,15-Tetraoxa-4,12-diaza-8-silaspiro-[7.7]-pentadecane der Formel (I)

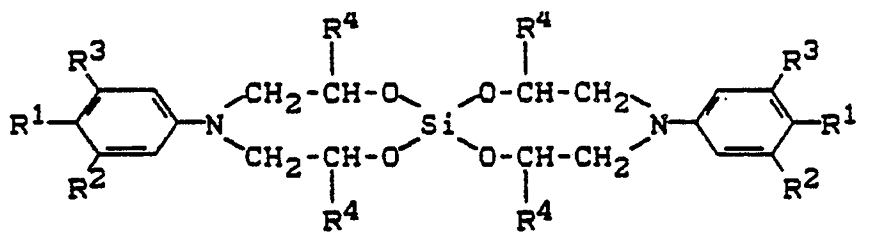
(I),

worin

$R^1$, $R^2$ und $R^3$ gleich oder verschieden sind und für Wasserstoff, $C_1$-$C_{18}$-Alkyl, $C_5$-$C_8$-Cycloalkyl, $C_5$-$C_{14}$-Aryl, Fluor, Chlor, Brom oder Jod stehen und

$R^4$ Wasserstoff, $C_1$-$C_{12}$-Alkyl, $C_6$-$C_{12}$-Aryl, Hydroxy-$C_1$-$C_6$-alkyl, Chlor-$C_1$-$C_6$-alkyl, $C_1$-$C_6$-Alkoxy-$C_1$-$C_6$-alkyl, $C_6$-$C_{12}$-Aryloxy-$C_1$-$C_6$-alkyl oder $C_2$-$C_6$-Acyloxy-$C_1$-$C_6$-alkyl

bedeutet.

das dadurch gekennzeichnet ist, daß man Alkoxysilane der Formel (II)

$Si(OR^5)_4$ (II),

worin

$R^5$ $C_1$-$C_4$-Alkyl bedeutet,

mit Alkanolaminen der Formel (III)

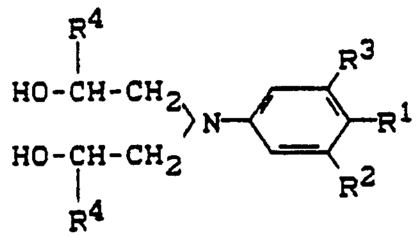

(III),

worin
$R^1$, $R^2$, $R^3$ und $R^4$ die obengenannte Bedeutung besitzen,
bei Temperaturen von 80 bis 160° C in Gegenwart von Alkali- und/oder Erdalkalialkoholaten umsetzt.

Bevorzugt wird die erfindungsgemäße Umsetzung bei Temperaturen von 100 bis 150° C durchgeführt.

Üblicherweise werden pro Mol Alkoxysilane der Formel (II) 1,5 bis 2,5 Mol, bevorzugt 1,9 bis 2,1 Mol, Alkanolamine der Formel (III) eingesetzt.

Als Alkali- und/oder Erdalkalialkoholate können verwendet werden die Alkanolate oder Oxyarylate der Alkali-oder Erdalkalimetalle, wie Natrium, Kalium, Magnesium und Kalzium, bevorzugt Natriummethylat und/oder Natriumphenolat. Die Alkoholate werden üblicherweise in Mengen von 0,0001 bis 0,1 Gew.-%, bevorzugt 0,01 bis 0,001 Gew.-%, eingesetzt.

Das erfindungsgemäße Verfahren kann entsprechend der durch die EP-OS 169 708 übermittelten Lehre durchgeführt werden.

Eine Möglichkeit der Herstellung der erfindungsgemäßen Verbindungen der Formel (I) besteht darin, daß man das entsprechende Alkoxysilan der Formel (II) mit dem entsprechenden Alkanolamin der Formel (III) in Gegenwart von beispielsweise Natriummethylat unter Stickstoff zunächst auf etwa 100 bis 110° C aufheizt, einige Zeit (etwa 2 bis 3 Stunden) bei dieser Temperatur das Reaktionsgemisch hält und anschließend das Reaktionsgemisch weiter auf etwa 140 bis 150° C aufheizt und wiederum einige Zeit bei dieser Temperatur hält. Während der Reaktion wird der entstehende Alkohol abgezogen. Es verbleibt im Reaktionsgefäß die gewünschte neue Verbindung der Formel (I).

Die erfindungsgemäßen Verbindungen der Formel (I) können verwendet werden als Härtungsbeschleuniger für ungesättigte Polyesterharze und Acrylharze.

"Ungesättigte Polyesterharze" im Sinne der Erfindung sind Mischungen von 30 bis 75 Gewichtsteilen $\alpha,\beta$-ethylenisch ungesättigter Polyester und 70 bis 25 Gewichtsteilen damit copolymerisierbarer ungesättigter Monomerer. Diese sind z.B. bei J.R. Lawrence, "Polyester Resins", Reinhold Publ. Corp., New York 1960, S. 18 f., und im Kunststoff-Handbuch, Bd. VIII ("Polyester"), Carl Hanser Verlag, München 1973, S. 247-312, beschrieben.

Bevorzugtes Monomer ist Styrol.

"Acrylharze" im Sinne der Erfindung sind (Meth-)-Acryloyloxygruppen enthaltende Polyester, Polyurethane, Poly epoxide, Polyole, Polyetherpolyole. Diese Acrylharze sind bekannt (siehe z.B. DE-OS 20 53 683, DE-OS 28 38 691 (Polyester(meth)acrylate), DE-OS 14 47 929, US 32 97 745 (Urethan(meth)acrylate), DE-OS 19 21 869, US 38 04 735 (Epoxy(meth)acrylate), US 35 58 387 (Polyol(meth)acrylate) und US 33 80 831 (Polyetherpolyol(meth)acrylate).

Die vorgenannten "Acrylharze" können zur Viskositätserniedrigung, Reaktivitätserhöhung oder zur Erzielung spezieller Eigenschaften auch mit copolymerisierbaren olefinisch ungesättigten Monomeren, z.B. mit (Meth-) Acrylsäurestern einwertiger Alkohole, Hydroxyalkyl(meth)-acrylaten, (Meth-)Acrylamiden, Styrol, $\alpha$-Methylstyrol, durch Alkylgruppen kernsubstituierte Styrole, Divinylbenzol, (Meth-)Acrylnitril, Vinylchlorid, Vinylidenchlorid, Vinylethern, Vinylacetat oder deren Mischungen abgemischt werden. Natürlich ist es auch möglich, mindestens ein $\alpha,\beta$-monoolefinisch ungesättigtes Monomeres, beispielsweise der vorstehend angegebenen Art, in Gegenwart der erfindungsgemäßen Verbindungen der Formel (I) zu polymerisieren.

Die neuen erfindungsgemäßen Verbindungen der Formel (I) können ebenfalls verwendet werden zur Härtung von Reaktionsmassen wie sie in der DE-OS 36 24 870 und in der DE-OS 36 25 169 beschrieben werden.

## Beispiele

### Herstellung der erfindungsgemäßen Verbindungen

Beispiel 1

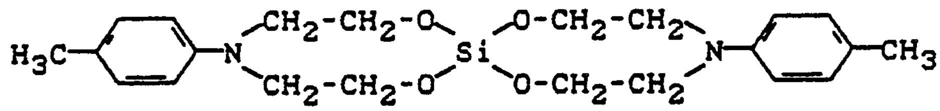

104 g Kieselsäuretetraethylester, 196 g N,N-Bis-(β-hydroxyethyl)-p-toluidin und 1 g Na-methylat werden unter Stickstoff in 1 h auf 100° C geheizt und 2 h bei 100-110° C gehalten, dann innerhalb von 1/2 h auf 140° C aufgeheizt und 1/2 h bei 140° C gehalten. Ab 90° C destilliert während der Heizphase kontinuierlich 77 g Ethanol ab. Man erhält ein braunes Harz mit einem Molgewicht von 410 g/Mol.

Beispiel 2

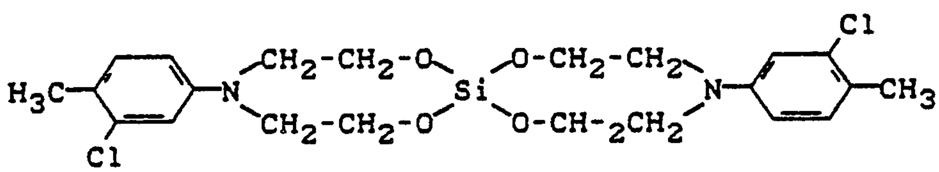

104 g Kieselsäuretetraethylester, 230,5 g N,N-Bis-(β-hydroxyethyl)-m-chlortoluidin und 1 g Na-methylat werden zusammen unter Stickstoff in 1 h auf 100° C geheizt und 2 h bei dieser Temperatur gerührt, in 15 min auf 140° C geheizt und 2 1/2 h bei 140-150° C gehalten. Es destillierten insgesamt 81 g Ethanol ab und es verbleibt ein dunkelbraunes Harz mit einem Molgewicht von 480 g/Mol (Th. 484,7 g/Mol).

Beispiel 3

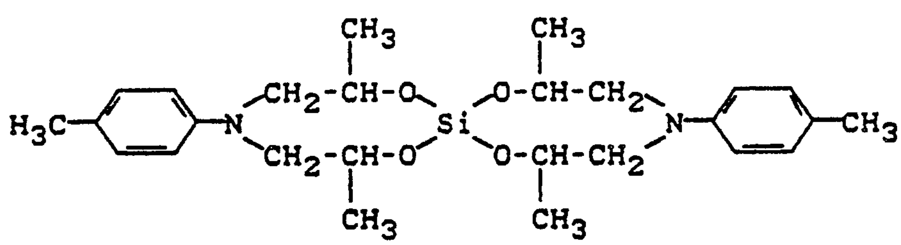

104 g Kieselsäuretetraethylester, 224 g N,N-Bis-(β-hydroxyethyl)-p-toluidin und 1 g Na-methylat werden unter Stickstoff in 1 h auf 100° C geheizt und 2 h bei 100° C gehalten. Danach wird innerhalb von 1/2 h auf 140° C geheizt und 2 h bei dieser Temperatur gerührt. Es destillieren 80 g Ethanol ab. Man erhält ein schwarzes, sprödes Harz mit einem Molgewicht von 460 (Th. 471,7).

Reaktivitätsbestimmung:

Die Bestimmung der Gelzeit, Härtezeit und Maximaltemperatur erfolgte gemäß DIN 16 945.

Als erfindungsgemäßer Beschleuniger diente die Verbindung aus Beispiel 1 (abgekürzt 1). Als Vergleich diente der Standardbeschleuniger A (Polykondensationsprodukt aus Adipinsäure und N,N-Bis-(hydroxypropyl)-p-toluidin, das 70 %ig in Styrol gelöst ist). Die Reaktivität wurde bestimmt, indem die Mischung aus Beschleuniger und Harz bei einer Anfangstemperatur von entweder 0 oder 25° C mit 2 % handelsüblicher Benzoylperoxid-Paste (50 % Benzoylperoxid-Gehalt) ausgehärtet wurde.

| Härtung in K 36 (UP-Harz der Bayer AG mit folgender Spezifikation: | | | | | |
|---|---|---|---|---|---|
| Festgehalt: 62 % | | | | | |
| Viskosität: 450-500 mPa.s | | | | | |
| Säurezahl: 12 mg KOH/g) | | | | | |
| Beschleuniger | % N | % in Harz | Gelzeit min | Härtezeit min | $T_{max}$ °C |
| A | 0,06 | 2 | 11,2 | 15,6 | 110 |
| 1 | 0,13 | 2 | 2,0 | 4,6 | 102 |
| 2 | 0,12 | 2 | 45,2 | 48,6 | 78 |
| 3 | 0,12 | 2 | 6,8 | 9,0 | 95 |

| Härtung in Leguval® K 27 (UP-Harz der Bayer AG mit folgender Spezifikation: | | | | | | | |
|---|---|---|---|---|---|---|---|
| Festgehalt: 70 % | | | | | | | |
| Viskosität: 2700-3100 mPa.s | | | | | | | |
| Säurezahl: 35 mg KOH/g) | | | | | | | |
| Beschleuniger | % N | % in Harz | Gelzeit 0-35 °C min | Härtezeit 0 °C-$T_{max}$ min | Gelzeit 25-35 °C min | Härtezeit 25 °C-$T_{max}$ min | $T_{max}$ °C |
| A | 0,05 | 1,68 | 72,3 | 75,6 | | | 104 |
| 1 | 0,05 | 0,81 | 40,7 | 45,3 | | | 77 |
| A | 0,05 | 1,68 | | | 8,2 | 10,3 | 138 |
| 1 | 0,05 | 0,81 | | | 4,1 | 6,1 | 142 |
| A* | 0,05 | 1,68 | | | 8,7 | 12,7 | 67 |
| 1* | 0,05 | 0,81 | | | 3,7 | 7,1 | 63 |

*) in Gegenwart von Sand mit einem Kornbereich von 0,2 bis 1 mm im Mischungsverhältnis 3 Teile Sand zu 1 Teil Harz.

| Härtung in Roskydal® K 14 M (UP-Harz der Bayer AG mit folgender Spezifikation: | | | | | |
|---|---|---|---|---|---|
| Festgehalt: 65 % | | | | | |
| Viskosität: 950-1150 | | | | | |
| Säurezahl: 30 mg KOH/g | | | | | |
| Beschleuniger | % N | % in Harz | Gelzeit 25-35 °C | Härtezeit 25-$T_{max}$ | $T_{max}$ °C |
| A | 0,10 | 3 | 6,8 | 9,4 | 128 |
| 1 | 0,13 | 2 | 6,4 | 9,0 | 127 |

## Ansprüche

1. 1,7,9,15-Tetraoxa-4,12-diaza-8-silaspiro-[7.7]-pentadecane der Formel

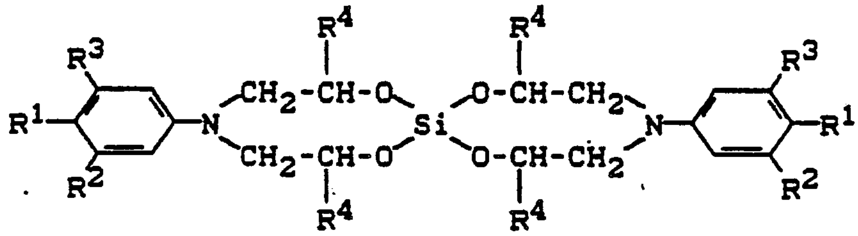

,

worin
$R^1$, $R^2$ und $R^3$ gleich oder verschieden sind und für Wasserstoff, $C_1$-$C_{18}$-Alkyl, $C_5$-$C_8$-Cycloalkyl, $C_5$-$C_{14}$-Aryl, Fluor, Chlor, Brom oder Jod stehen und
$R^4$ Wasserstoff, $C_1$-$C_{12}$-Alkyl, $C_6$-$C_{12}$-Aryl, Hydroxy-$C_1$-$C_6$-alkyl, Chlor-$C_1$-$C_6$-alkyl, $C_1$-$C_6$-Alkoxy-$C_1$-$C_6$-alkyl, $C_6$-$C_{12}$-Aryloxy-$C_1$-$C_6$-alkyl oder $C_2$-$C_6$-Acyloxy-$C_1$-$C_6$-alkyl
bedeutet.

2. Verfahren zur Herstellung der neuen 1,7,9,15-Tetraoxa-4,12-diaza-8-silaspiro-[7.7]-pentadecane der Formel

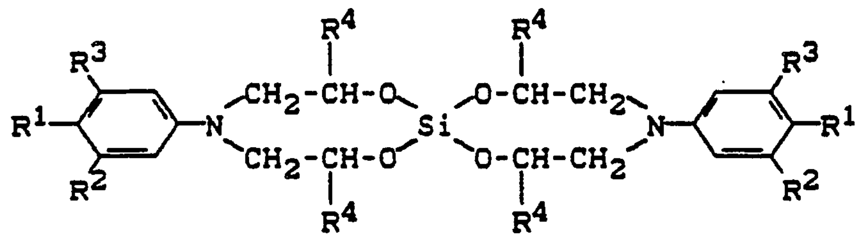

,

worin
$R^1$, $R^2$ und $R^3$ gleich oder verschieden sind und für Wasserstoff, $C_1$-$C_{18}$-Alkyl, $C_5$-$C_8$-Cycloalkyl, $C_5$-$C_{14}$-Aryl, Fluor, Chlor, Brom oder Jod stehen und
$R^4$ Wasserstoff, $C_1$-$C_{12}$-Alkyl, $C_6$-$C_{12}$-Aryl, Hydroxy-$C_1$-$C_6$-alkyl, Chlor-$C_1$-$C_6$-alkyl, $C_1$-$C_6$-Alkoxy-$C_1$-$C_6$-alkyl, $C_6$-$C_{12}$-Aryloxy-$C_1$-$C_6$-alkyl oder $C_2$-$C_6$-Acyloxy-$C_1$-$C_6$-alkyl
bedeutet,
das dadurch gekennzeichnet ist, daß man Alkoxysilane der Formel

$Si(OR^5)_4$,

worin
$R^5$ $C_1$-$C_4$-Alkyl bedeutet,
mit Alkanolaminen der Formel

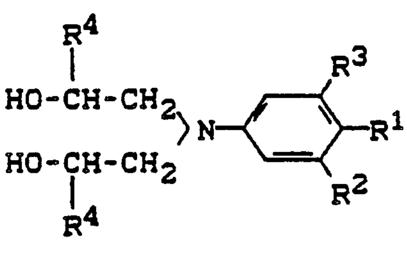

,

worin
$R^1$, $R^2$, $R^3$ und $R^4$ die obengenannte Bedeutung besitzen,
bei Temperaturen von 80 bis 160 °C in Gegenwart von Alkali- und/oder Erdalkalialkoholaten umsetzt.

3. Verwendung der 1,7,9,15-Tetraoxa-4,12-diaza-8-silaspiro-[7.7]-pentadecane der Formel

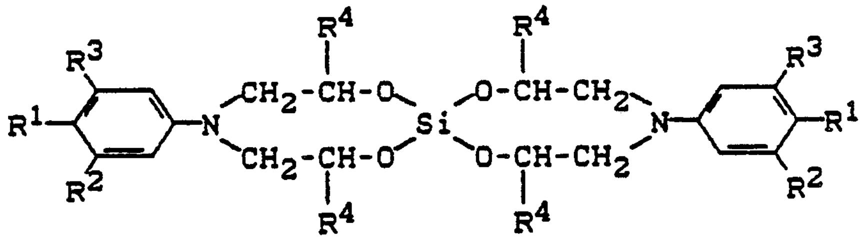 ,

worin

$R^1$, $R^2$ und $R^3$ gleich oder verschieden sind und für Wasserstoff, $C_1$-$C_{18}$-Alkyl, $C_5$-$C_8$-Cycloalkyl, $C_5$-$C_{14}$-Aryl, Fluor, Chlor, Brom oder Jod stehen und

$R^4$ Wasserstoff, $C_1$-$C_{12}$-Alkyl, $C_6$-$C_{12}$-Aryl, Hydroxy-$C_1$-$C_6$-alkyl, Chlor-$C_1$-$C_6$-alkyl, $C_1$-$C_6$- Alkoxy-$C_1$-$C_6$-alkyl, $C_6C_{12}$-Aryloxy-$C_1$-$C_6$-alkyl oder $C_2$-$C_6$-Acyloxy-$C_1$-$C_6$-alkyl

bedeutet.

als Härtungsbeschleuniger für ungesättigte Polyesterharze und Acrylharze.